# EUROPÄISCHE PATENTANMELDUNG

(11) **EP 3 666 344 A1**
(43) Veröffentlichungstag der Anmeldung: **17.06.2020**
(21) Anmeldenummer: 18211212.8
(22) Anmeldetag: 10.12.2018
(51) Int. Cl.: A62C 2/24, A62C 3/16, F16L 5/04, F16L 55/10

(54) **BRANDSCHUTZELEMENT MIT BIMETALL**

(71) Anmelder: Hilti Aktiengesellschaft, 9494 Schaan (LI)
(72) Erfinder: Ahlers, Andreas, 87679 Westendorf (DE); Simon, Sebastian, 86807 Buchloe Lindenberg (DE)
(74) Vertreter: Hilti Aktiengesellschaft Corporate Intellectual Property

(57) **Zusammenfassung**

Die Erfindung betrifft ein Brandschutzelement (10) zum Abdichten eines eine Öffnung (22) in einer Wand oder Decke durchsetzenden brennbaren Körpers im Brandfall. Das Brandschutzelement (10) weist einen bandförmigen Träger (12) auf, von dem quer zu seiner Längsrichtung randseitig Zungen (14) abstehen, die mit dem bandförmigen Träger (12) verbunden sind, wobei zumindest ein wesentlicher Teil der Zungen (14) aus einem Bimetall gebildet ist, die sich unter Wärmeeinwirkung in eine Richtung bewegen können. Zumindest auf einer Seite der Zungen (14) ist ein Brandschutzmaterial (18) aufgebracht. Ferner ist ein Verfahren zum Abdichten eines eine Öffnung (22) in einer Wand oder Decke durchsetzenden brennbaren Körpers im Brandfall beschrieben.

## Beschreibung

Die Erfindung betrifft ein Brandschutzelement sowie ein Verfahren zum Abdichten eines eine Öffnung in einer Wand oder Decke durchsetzenden brennbaren Körpers im Brandfall unter Verwendung des Brandschutzelements.

Um eine Ausbreitung von Feuer oder Rauch in Gebäuden zu verhindern, müssen Durchbrüche in Decken oder Wänden, in denen beispielsweise Rohre oder Kabel geführt werden, im Brandfall verschlossen werden können. Dazu können Bauelemente mit einem intumeszierenden Material verwendet werden. Im Brandfall schäumt das intumeszierende Material durch die ansteigende Temperatur auf und verschließt die Öffnung, wodurch die Ausbreitung von Rauch oder Feuer durch diese Öffnung verhindert oder zumindest verzögert wird.

Das intumeszierende Material wird oft in Form von Brandschutzeinlagen verwendet, die als Bandagen oder Bänder in die Wand oder in Form von Manschetten vor der Wand montiert werden. Die Brandschutzeinlage ist üblicherweise an einem Gehäuse oder einem Gewebe befestigt, welches beispielsweise aus Plastik, Glasfaser oder Metall gefertigt ist.

Problematisch ist dabei, dass die üblicherweise verwendeten intumeszierenden Materialien, beispielsweise Blähgraphit, eine vergleichsweise hohe Aktivierungstemperatur von über 150 °C aufweisen. Besonders im Fall von niedrigschmelzenden Rohren, beispielsweise aus Polypropylen, kann dies dazu führen, dass das zu verschließende Rohr weggeschmolzen ist bevor das intumeszierende Material die Rohröffnung verschließen kann.

Um dieses Problem zu beheben, sind Brandschutzvorrichtungen bekannt, mit welchen ein Rohr zusätzlich mechanisch verschlossen wird. In der AU 2018 217 245 A1 ist beispielsweise ein System gezeigt, in welchem mehrere von einer niedrigschmelzenden Lasche gehaltene Federn vorgesehen sind, die im Brandfall zusätzlich zu einem intumeszierenden Material das Rohr mechanisch zusammendrücken.

In der DE 10 2004 014 347 B4 werden lamellenförmige Sperrelemente aus Bimetall eingesetzt, welche aufgerollt um das Rohr angeordnet sind und sich im Brandfall entrollen, um auf diese Weise die Öffnung irisartig zu verschließen.

All diesen Lösungen ist gemein, dass sie in der Herstellung kostspielig sind und erst bei erhöhten Temperaturen einen Verschluss sicherstellen. Gleichzeitig benötigen die bekannten Brandschutzlösungen bei Verwendung zusätzlicher mechanischer Elemente, beispielsweise Federn, viel Platz, wodurch eine Installation erschwert wird.

Eine Aufgabe der Erfindung ist es daher, ein kostengünstiges und einfach aufgebautes Brandschutzelement bereitzustellen, welches eine Öffnung im Brandfall frühzeitig verschließen kann.

Die Aufgabe wird erfindungsgemäß gelöst durch ein Brandschutzelement zum Abdichten eines eine Öffnung in einer Wand oder Decke durchsetzenden brennbaren Körpers im Brandfall, wobei das Brandschutzelement einen bandförmigen Träger aufweist, von dem quer zu seiner Längsrichtung randseitig Zungen abstehen, die mit dem bandförmigen Träger verbunden sind, wobei zumindest ein wesentlicher Teil der Zungen aus einem Bimetall gebildet ist, die sich unter Wärmeeinwirkung in eine Richtung bewegen können, und wobei zumindest auf einer Seite der Zungen ein Brandschutzmaterial aufgebracht ist.

Die Verwendung eines Bimetalls hat den Vorteil, dass sich die Zungen des Brandschutzelements bereits bei nur leicht erhöhten Temperaturen bewegen können und so frühzeitig beginnen, die Öffnung zu verschließen, sobald der brennbare Körper zu erweichen beginnt. Bei welcher Temperatur und mit wie viel Kraft diese Bewegung ausgeführt wird, kann über die Wahl eines spezifischen Bimetalls eingestellt werden. Es ist erfindungswesentlich, dass ein wesentlicher Teil der Zungen aus einem Bimetall gebildet ist, wobei der Ausdruck ein wesentlicher Teil der Zungen bedeutet, dass mindestens 50% der Zungen, bevorzugter mindestens 75%, weiter bevorzugt mindestens 90 % der Zungen aus einem Bimetall gebildet sind. Es ist besonders bevorzugt, dass alle Zungen des Brandschutzelementes aus Bimetall gebildet sind.

Da sich das Bimetall selbst aktiv in Richtung auf die Mitte des erweichenden brennbaren Körpers bewegt, wird die Öffnung durch die Zungen mechanisch verschlossen. Wenn zumindest die Zungen des Brandschutzelements zusätzlich mit einem Brandschutzmaterial versehen sind, kann dieses durch Bewegung des Bimetalls aktiv in das Zentrum der Öffnung bewegt und somit näher an die von dem brennbaren Körper freigelegte und zu verschließende Öffnung transportiert werden. Tritt das Feuer bereits von der anderen Seite der Wand durch die Öffnung, wird das Brandschutzmaterial auf diese Weise zur Hitzequelle hinbewegt und so einer erhöhten Temperatur ausgesetzt, sodass es früher aktiviert wird. Somit unterstützen die Zungen als Träger des Brandschutzmaterials aktiv den Verschluss der Öffnung im Brandfall. Zusätzlich verhindert das BimetaIII einen Durchtritt von Wärmestrahlung oder reduziert den Durchtritt dieser zumindestens.

Das Brandschutzmaterial kann auf beiden Seiten der Zungen und auf dem bandförmigen Träger, bevorzugt nur auf beiden Seiten der Zungen und besonders bevorzugt nur auf der Seite der Zungen angebracht sein, die einen geringeren Dehnungskoeffizienten aufweist. Auf diese Weise kann, je nach verwendetem brennbaren Körper, beispielsweise einem Rohr, möglichst materialsparend eine ausreichende Menge an Brandschutzmaterial aufgebracht werden. Insbesondere das Brandschutzmaterial, das auf der Seite der Zungen mit einem geringeren Dehnungskoeffizienten aufgebracht ist, wird durch die Bewegung der Zungen effektiv in die Mitte der Öffnung bewegt und zusätzlich von den Zungen abgedeckt.

Indem der bandförmige Träger und die Zungen einstückig ausgeführt sind, kann eine besonders einfache und kompakte Bauweise erzielt werden. So kann beispielsweise ein Bimetallband ausreichender Länge in regelmäßigen Abständen eingeschnitten werden, um ein Brandschutzelement zu erhalten, bei dem der Träger und die Zungen einstückig aus dem Bimetall gefertigt sind.

In einer bevorzugten Ausführungsform können die Zungen durch Schlitze voneinander getrennt sein. Dadurch wird gewährleistet, dass das Brandschutzelement als Manschette, beispielsweise um ein Rohr, angebracht werden kann, ohne dass sich die Zungen zwangsweise überlappen müssen.

Um einen ausreichenden Verschluss der Öffnung zu garantieren, können die Zungen abstandsfrei angeordnet sein. So wird erreicht, dass an jedem Punkt des Rohres eine Zunge anliegt.

Eine Ausführung der Zungen in Form von Rechtecken gestattet eine besonders einfache und kostengünstige Herstellungsweise des Brandschutzelements.

Ein frühzeitiges Verschließen der Öffnung kann erreicht werden, wenn die Zungen ab einer Temperatur von 100 °C, bevorzugt ab einer Temperatur von 60 °C und besonders bevorzugt ab einer Temperatur von 40 °C beginnen, sich zu bewegen, um so eine Kraft auf den brennbaren Körper auszuüben.

Bevorzugt erreichen die Zungen eine Endstellung bereits bei einer Temperatur von höchstens 250 °C, besonders bevorzugt bei einer Temperatur von höchstens 200 °C und noch bevorzugter bei einer Temperatur von höchstens 150 °C. Dadurch wird erreicht, dass das Brandschutzmaterial sich bereits in der Mitte der Öffnung befindet, bevor das Brandschutzmaterial aktiviert wird.

In einer bevorzugten Ausführungsform können die Zungen, ausgehend von ihrer Ausgangsstellung, eine Biegung von mehr als 20°, bevorzugt von mehr als 90°, jedoch weniger als 135° vollziehen. Auf diese Weise verschließen die Zungen im Brandfall selbst mechanisch die Öffnung, die durch die Zersetzung des brennbaren Körpers freigelegt wird. Gleichzeitig biegen sie sich jedoch nicht so weit, dass sie die Öffnung wieder freigeben würden.

Das mindestens auf die Zungen aufgebrachte Brandschutzmaterial kann ausgewählt sein aus der Gruppe bestehend aus intumeszierendem Material, insbesondere Blähgraphit, Brandschutzbeschichtungen, Brandschutzschaum, insbesondere auf Polyurethanbasis, und Ablationsbeschichtungen, insbesondere aus Aluminiumtrihydrat, und aus Kombinationen davon. Alternativ oder zusätzlich zu Blähgraphit kann das intumeszierende Material ein Treibmittel auf Basis von Melamin, einen Säurebildner, beispielsweise Ammoniumpolyphosphat, und einen Aschebildner, beispielsweise einen oder mehrere Polyalkohole, enthalten. Auf diese Weise kann je nach Typ des brennbaren Körpers ein passendes Brandschutzmaterial ausgewählt werden.

Bei der Verwendung von Blähgraphit als Brandschutzmaterial ergibt sich eine Anordnung, in welcher der aufgeblähte Blähgraphit die Öffnung verschließt und zusätzlich mechanisch durch die Zungen stabilisiert wird. Grundsätzlich wird dadurch auch die Verwendung von weniger Brandschutzmaterial ermöglicht, da sich trotzdem ausreichend gute Verschlusseigenschaften des Brandschutzelements erzielen lassen.

Auf eine oder beide Seiten der Zungen und/oder den bandförmigen Träger können auch unterschiedliche Brandschutzmaterialien aufgebracht sein, ausgewählt aus der Gruppe bestehend aus intumeszierendem Material, insbesondere Blähgraphit, Brandschutzbeschichtungen, Brandschutzschaum, insbesondere auf Polyurethanbasis, und Ablationsbeschichtungen, insbesondere Aluminiumtrihydrat, und aus Kombinationen davon. Dadurch kann das Brandschutzelement auf eine spezifische Anforderung maßgeschneidert werden.

Der bandförmige Träger und/oder die Zungen können mit einer zusätzlichen Beschichtung versehen sein, bevorzugt einer Haftbeschichtung und/oder einer Farbbeschichtung. Eine Haftbeschichtung verbessert beispielsweise die Haftung des aufgebrachten Brandschutzmaterials auf dem Brandschutzelement. Besonders vorteilhaft ist es, wenn zumindest eine Seite des Brandschutzelements mit einer Farbbeschichtung versehen ist. Dadurch kann beispielsweise die Seite mit einem geringeren Ausdehnungskoeffizienten farblich markiert werden, welche die zur Mitte der Öffnung zeigende Seite bilden soll, um eine korrekte Montage sicherzustellen.

Um die Brandschutzeigenschaften weiter zu verbessern, kann das Brandschutzelement ein zusätzliches Brandschutzband umfassen, welches auf dem Träger und/oder den Zungen angeordnet ist, wobei das Brandschutzband ein Brandschutzmaterial umfasst, ausgewählt aus der Gruppe bestehend aus intumeszierendem Material, insbesondere Blähgraphit, Brandschutzbeschichtungen, Brandschutzschaum, insbesondere PolyurethanSchaum, und Ablationsbeschichtungen, insbesondere Aluminiumtrihydrat, und aus Kombinationen davon. Auf diese Weise können zusätzliche Brandschutzschichten vorgesehen werden, die ergänzend das Verschließen der Öffnung im Brandfall sicherstellen.

Gegenstand der Erfindung ist ferner ein Verfahren zum Abdichten eines eine Öffnung in einer Wand oder Decke durchsetzenden brennbaren Körpers im Brandfall, wobei zunächst ein erfindungsgemäßes Brandschutzelement bereitgestellt wird. Anschließend wird das Brandschutzelement in die Öffnung in der Wand oder Decke eingebracht, wobei die Zungen mindestens teilweise aus der Öffnung vorstehen und den brennbaren Körper umgeben. Auf diese Weise sind die Zungen im Brandfall einer schnellen Erwärmung ausgesetzt und beginnen, sich in Richtung der zu verschließenden Öffnung zu bewegen, noch bevor der brennbare Körper vollständig zersetzt ist. Außerdem kann so eine frühzeitige Aktivierung des auf den Zungen angebrachten Brandschutzmaterials erreicht werden.

Gemäß einer ersten Ausführungsform des Verfahrens kann das Brandschutzelement in einen zwischen der Wand oder Decke und dem bereits in die Öffnung eingebrachten brennbaren Körper gebildeten Spalt eingeschoben und mittels Verkleben fixiert werden. Alternativ dazu kann das Brandschutzelement in die Öffnung eingesetzt und darin befestigt werden, bevor der brennbare Körper in die Öffnung eingebracht wird.

Gemäß einer weiteren Ausführungsform kann das Brandschutzelement mittels eines Verschlusselements, eines Drahts, Metallkabelbinders oder Klebers am brennbaren Körper angebracht und zusammen mit diesem in die Öffnung in der Decke oder Wand eingeschoben werden. Dadurch ist eine einfache und platzsparende Montage des Brandschutzelements möglich.

Weitere Vorteile und Eigenschaften der Erfindung ergeben sich aus der nachfolgenden Beschreibung bevorzugter Ausführungsformen und den Zeichnungen, auf die Bezug genommen wird. Diese sollen jedoch nicht in einem einschränkenden Sinn verstanden werden. In den Zeichnungen zeigen:
- Figur 1 eine Draufsicht auf ein erfindungsgemäßes Brandschutzelement,
- Figur 2 eine Ansicht eines um eine Rohrleitung angeordneten erfindungsgemäßen Brandschutzelements im Querschnitt, wobei sich die Zungen in einer Ausgangsstellung befinden, und
- Figur 3 eine perspektivische Ansicht eines erfindungsgemäßen Brandschutzelements in der Ausgangsstellung, das um eine durch eine Öffnung in einer Wand geführte Rohrleitung gelegt ist.

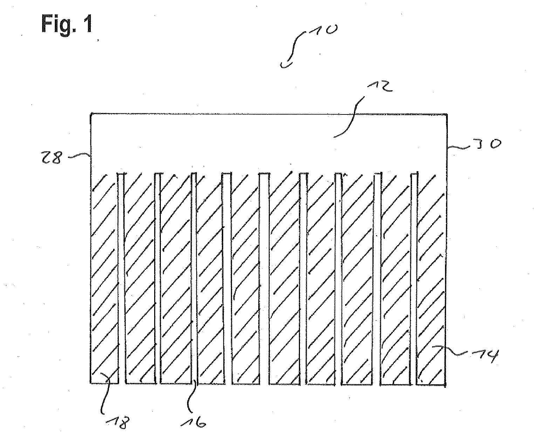

In Figur 1 ist ein Brandschutzelement 10 gezeigt, mit einem bandförmigen Träger 12, von dem quer zu seiner Längsrichtung randseitig Zungen 14 abstehen, die mit dem bandförmigen Träger 12 verbunden sind.

In der gezeigten Ausführungsform sind der bandförmige Träger 12 und die Zungen 14 einstückig ausgeführt und aus einem Bimetall gebildet.

Alternativ dazu können der bandförmige Träger 12 und die Zungen 14 aus unterschiedlichen Materialien bestehen. Insbesondere können lediglich die Zungen 14 aus einem Bimetall gebildet sein, und der Träger 12 kann aus einem günstigeren Material, beispielsweise Stahlblech, bestehen.

Die Zungen 14 können auch am bandförmigen Träger 12 verklebt, verschweißt, verlötet oder an diesem verschraubt sein. In einer alternativen Ausführungsform kann der bandförmige Träger 12 auch Aussparungen umfassen, in denen die Zungen 14 eingreifen und befestigt sind.

Die einzelnen Zungen 14 können die gleiche oder unterschiedliche Breiten aufweisen. Die Breiten der Zungen werden vorteilhaft anhand der zu verschließenden Öffnung ausgewählt. Vorzugsweise haben die Zungen daher eine Breite von 1/3 des Durchmessers der zu verschließenden Öffnung, bevorzugter von 1/6, weiter bevorzugt von 1/12 oder kleiner. Besonders bevorzugt weisen die Zungen eine Breite von 25 mm auf.

In Figur 1 ist eine Ausführungsform gezeigt, in welcher die Zungen 14 durch Schlitze 16 voneinander getrennt sind. In einer weiteren, hier nicht gezeigten Ausführungsform, sind die Zungen 14 abstandsfrei zueinander angeordnet.

Die Zungen 14 sind bevorzugt rechteckig ausgeführt und parallel zueinander angeordnet. Eine solche Ausführungsform ist vergleichsweise einfach herzustellen, indem ein Bimetallband in regelmäßigen Abständen mit einem geeigneten Schneidwerkzeug eingeschnitten wird. Grundsätzlich sind jedoch auch andere Formen der Zungen vorstellbar, beispielsweise eine sich zum freien Ende der Zungen verjüngende Trapezform, um den brennbaren Körper, bevorzugt eine Rohrleitung oder einen Kabelkanal, auf eine gewünschte Weise zu umschließen.

In der in Figur 1 gezeigten Ausführungsform ist auf den Zungen 14 ein Brandschutzmaterial 18 aufgebracht. Die Verwendung von Blähgraphit als Brandschutzmaterial 18 ist besonders bevorzugt, da dieser einen guten Verschluss gewährleistet und kostengünstig in der Verarbeitung ist.

Da die Zungen 14 aus einem Bimetall gebildet sind, können sie sich bei Temperaturänderung in eine Richtung verbiegen. Ein Bimetall umfasst zwei Schichten von Metallen mit unterschiedlichem thermischen Ausdehnungskoeffizienten. Dadurch bewegt sich das Bimetall bei Temperaturänderung in die Richtung, in der das Metall mit einem geringeren Ausdehnungskoeffizienten angebracht ist. Entsprechend wird das Brandschutzelement 10 so angebracht, dass diese Seite der Zungen 14 zum brennbaren Körper beziehungsweise zur Mitte der im Brandfall zu verschließenden Öffnung weist.

Diese Seite, welche in Figur 1 dargestellt ist, kann mit einer zusätzlichen Farbbeschichtung versehen sein, insbesondere einer eingefärbten Acryl-Dispersion, die während der Montage des Brandschutzelements 10 die korrekte Ausrichtung anzeigt.

Auch kann zumindest auf die Zungen 14 eine zusätzliche Haftbeschichtung vor Aufbringen des Brandschutzmaterials 18 vorgesehen sein, welche eine bessere Haftung des Brandschutzmaterials 18 auf der Oberfläche des Brandschutzelements 10 gewährleistet.

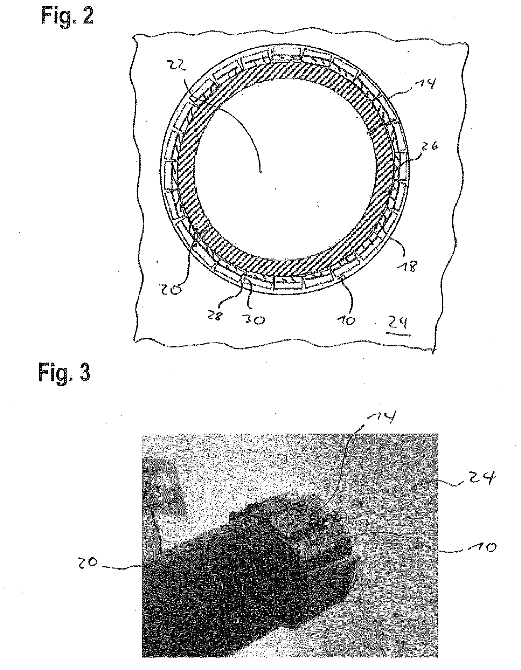

In Figur 2 ist ein in eine Öffnung 22 eingebrachter brennbarer Körper in Form einer Rohrleitung 20 im Querschnitt gezeigt, die eine abgegrenzt dargestellte Wand 24 durchsetzt. Um die Rohrleitung 20 herum ist innerhalb eines Spalts 25 zwischen der Rohrleitung 20 und der Wand 24 ein Brandschutzelement 10 angeordnet. Das Brandschutzelement 10 umfasst mehrere Zungen 14 und eine Richtung Rohr weisende, auf den Zungen 14 aufgebrachte Beschichtung 26 aus dem Brandschutzmaterial 18. Die Zungen 14 stehen mindestens teilweise aus der Wand 24 vor und umgeben die Rohrleitung 20.

Anstelle der Rohrleitung 20 kann ein Kabel oder ein Kabelkanal vorgesehen sein, das oder der durch die Öffnung 22 in der Wand 24 geführt ist.

Die Zungen 14 weisen eine geringe Dicke auf, beispielsweise höchstens 1 mm. Die Dicke der Beschichtung 26 aus dem Brandschutzmaterial 18 kann je nach gewünschtem Einsatzgebiet gewählt werden und liegt bevorzugt in einem Bereich von 0,5 bis 4,5 mm. Bevorzugt ist die Beschichtung 26 jedoch höchstens fünfmal, bevorzugter dreimal und noch bevorzugter doppelt so dick wie die Zungen 14.

Im Brandfall erhitzt sich die Rohrleitung 20 bis zum Versagen des Materials der Rohrleitung 20. Insbesondere bei niedrigschmelzenden Kunststoffrohren, beispielsweise aus Polyethylen oder Polypropylen, versagt das Material der Rohrleitung 20 bereits bei Temperaturen ab etwa 130 °C. In diesem Fall werden die Zungen 14 schnell erhitzt und bewegen sich in Richtung der Mitte der von der Rohrleitung 20 freigelegten Öffnung 22, selbst wenn das Brandschutzmaterial 18 noch nicht aktiviert ist.

Dadurch wird die Öffnung 22 bereits mechanisch von den Zungen 14 zumindest teilweise verschlossen, sodass sich eine Kappe auf der Öffnung 22 bildet.

Durch die Bewegung der Zungen 14 wird das Brandschutzmaterial 18 näher in die Mitte der Öffnung 22 bewegt und größeren Temperaturen ausgesetzt, sodass die Aktivierungstemperatur das Brandschutzmaterials 18 erreicht wird.

Wird beispielsweise Blähgraphit als Brandschutzmaterial 18 genutzt, bläht sich dieses in der Hitze sehr schnell auf und verschließt so, zusätzlich zu den Zungen 14, die Öffnung 22. Auf diese Weise wird ein sehr stabiler Verschluss gewährleistet, welcher zum einen durch den aufgeblähten Blähgraphit gebildet und zum anderen über die Zungen 14 mechanisch stabilisiert wird.

Die Rohrleitung 20 kann auch ein Leerrohr sein. Diese schmelzen im Brandfall besonders schnell, sodass ein möglichst früher Verschluss der Öffnung 22 benötigt wird. Dies wird durch die frühe Aktivierung der Zungen 14 bei niedrigen Temperaturen ermöglicht.

In der in Figur 2 gezeigten Ausführungsform ist das Brandschutzelement 10 als Brandschutzband um die Rohrleitung 20 gelegt. Um eine solche Anordnung zu erzielen, kann ein vorgeschnittenes und beschichtetes Band aus Bimetall, wie in Figur 1 gezeigt, um eine Rohrleitung 20 herumgeführt und zusammen mit der Rohrleitung 20 in die Öffnung 22 eingeschoben werden.

Dazu wird eine erste Seitenkante 28 des Brandschutzelements 10 in Richtung einer zweiten Seitenkante 30 des Brandschutzelements 10 geführt. Die beiden Seitenkanten 28 und 30 können entweder, wie in Figur 2 gezeigt, nebeneinander angeordnet werden, oder sich überlappen.

Die Seitenkanten 28 und 30 können miteinander verklebt werden oder es werden hier nicht gezeigte Verschlusselemente an den Seitenkanten 28 und 30 des Brandschutzelements 10 angebracht und miteinander verbunden.

Alternativ wird das Brandschutzelement 10 um die Rohrleitung 20 herumgeführt und anschließend mittels eines Drahts und/oder eines Metallkabelbinders an diesem fixiert.

Die Befestigung des Brandschutzelements 10 an der Rohrleitung 20 kann entweder durchgeführt werden, wenn die Rohrleitung 20 bereits innerhalb der Öffnung 22 montiert ist oder bevor die Rohrleitung 20 in die Öffnung 22 eingesetzt wird.

Es ist auch denkbar, dass der bandförmige Träger 12 an der Rohrleitung 20 verklebt wird und das Brandschutzelement 10 auf diese Weise an der Rohrleitung 20 befestigt wird. Diese Variante eignet sich insbesondere, wenn das Brandschutzelement 10 vor einer Montage der Rohrleitung 20 in der Öffnung 22 an der Rohrleitung 20 angebracht wird.

Schließlich kann das Brandschutzelement 10 zuerst in die Öffnung 22 eingebracht und darin beispielsweise durch Verkleben befestigt werden, bevor die Rohleitung 20 in die Öffnung 22 eingesetzt wird.

In allen Ausführungsformen erfolgt die Montage des Brandschutzelements 10 so, dass die Zungen 14 mindestens teilweise von der Wand 24 abstehen, so dass sie im Brandfall einer schnellen Erwärmung ausgesetzt sind.

In Figur 3 ist eine perspektivische Ansicht einer Rohrleitung 20 mit einem um die Rohrleitung 20 angebrachten Brandschutzelement 10 gezeigt. In dieser Ausführungsform überlappen die Zungen 14 einander zumindest teilweise.

Auch ragt in Figur 3 zumindest ein Teil der Zungen 14 aus der Wand 24 heraus, während der bandförmige Träger 12 komplett innerhalb der Wand 24 verbaut ist. Auf diese Weise ist eine sichere Anbringung des Brandschutzelements 10 gewährleistet, während die Zungen 14 im Brandfall schnell erhitzt werden können und so einen frühzeitigen Verschluss der von der sich zersetzenden Rohrleitung 20 freigelegten Öffnung 22 sicherstellen.

Das Brandschutzelement 10 kann, wie in Figur 3 gezeigt, besonders platzsparend montiert werden, da keinerlei Manschette oder Fixierung angebracht werden muss.

## Patentansprüche

1. Brandschutzelement (10) zum Abdichten eines eine Öffnung (22) in einer Wand oder Decke durchsetzenden brennbaren Körpers im Brandfall, wobei das Brandschutzelement (10) einen bandförmigen Träger (12) aufweist, von dem quer zu seiner Längsrichtung randseitig Zungen (14) abstehen, die mit dem bandförmigen Träger (12) verbunden sind, wobei
zumindest ein wesentlicher Teil der Zungen (14) aus einem Bimetall gebildet ist, die sich unter Wärmeeinwirkung in eine Richtung bewegen können, und wobei zumindest auf einer Seite der Zungen (14) ein Brandschutzmaterial (18) aufgebracht ist.

2. Brandschutzelement nach Anspruch 1, **dadurch gekennzeichnet, dass** das Brandschutzmaterial (18) auf beiden Seiten der Zungen (14) und auf dem Träger (12), bevorzugt nur auf beiden Seiten der Zungen (14) und besonders bevorzugt nur auf der Seite der Zungen (14) aufgebracht ist, die einen geringeren Dehnungskoeffizienten aufweist.

3. Brandschutzelement nach Anspruch 1 oder 2, **dadurch gekennzeichnet, dass** der Träger (12) und die Zungen (14) einstückig ausgeführt sind.

4. Brandschutzelement nach einem der vorhergehenden Ansprüche, **dadurch gekennzeichnet, dass** die Zungen (14) durch Schlitze (16) voneinander getrennt sind, oder dass die Zungen (14) abstandsfrei angeordnet sind.

5. Brandschutzelement nach einem der vorhergehenden Ansprüche, **dadurch gekennzeichnet, dass** die Zungen (14) in Form von Rechtecken ausgeführt sind, bevorzugt dass die Zungen (14) parallel zueinander angeordnet sind.

6. Brandschutzelement nach einem der vorhergehenden Ansprüche, **dadurch gekennzeichnet, dass** die Zungen (14) ab einer Temperatur von 100 °C, bevorzugt ab einer Temperatur von 60 °C, sich zu bewegen, und bevorzugt, dass die Zungen (14) bei einer Temperatur von höchstens 250 °C, eine Endstellung erreichen.

7. Brandschutzelement nach einem der vorhergehenden Ansprüche, **dadurch gekennzeichnet, dass** die Zungen (14), ausgehend von ihrer Ausgangsstellung, beim Erwärmen eine Biegung von mehr als 20°, bevorzugt von mehr als 90°, jedoch weniger als 135° vollziehen können.

8. Brandschutzelement nach einem der vorhergehenden Ansprüche, **dadurch gekennzeichnet, dass** die Bewegung der Zungen (14) reversibel ist.

9. Brandschutzelement nach einem der vorherigen Ansprüche, **dadurch gekennzeichnet, dass** das Brandschutzmaterial (18) ausgewählt ist aus der Gruppe bestehend aus intumeszierendem Material, insbesondere Blähgraphit, Brandschutzbeschichtungen, Brandschutzschaum, insbesondere auf Polyurethanbasis und Ablationsbeschichtungen, insbesondere Aluminiumtrihydrat, und aus Kombinationen davon.

10. Brandschutzelement nach einem der vorhergehenden Ansprüche, **dadurch gekennzeichnet, dass** auf einer oder beiden Seiten der Zungen (14) und/oder dem Träger (12) unterschiedliche Brandschutzmaterialien (18) aufgebracht sind, bevorzugt Brandschutzmaterialien (18) ausgewählt aus der Gruppe bestehend aus intumeszierendem Material, insbesondere Blähgraphit, Brandschutzbeschichtungen, Brandschutzschaum, insbesondere auf Polyurethanbasis, und Ablationsbeschichtungen, insbesondere Aluminiumtrihydrat, und/oder aus Kombinationen davon.

11. Brandschutzelement nach einem der vorhergehenden Ansprüche, **dadurch gekennzeichnet, dass** der Träger (12) und/oder die Zungen (14) mit einer zusätzlichen Beschichtung versehen sind, bevorzugt einer Haftbeschichtung und/oder einer Farbbeschichtung.

12. Brandschutzelement nach einem der vorhergehenden Ansprüche, **dadurch gekennzeichnet, dass** das Brandschutzelement (10) ein zusätzliches Brandschutzband umfasst, welches auf dem Träger (12) und/oder den Zungen (14) angeordnet ist, wobei das Brandschutzband bevorzugt ein Brandschutzmaterial (18) umfasst, das aus der Gruppe bestehend aus intumeszierendem Material, insbesondere Blähgraphit, Brandschutzbeschichtungen, Brandschutzschaum, insbesondere auf Polyurethanbasis, und Ablationsbeschichtungen, insbesondere Aluminiumtrihydrat, und/oder aus Kombinationen davon ausgewählt ist.

13. Verfahren zum Abdichten eines eine Öffnung (22) in einer Wand (24) oder Decke durchsetzenden brennbaren Körpers, bevorzugt einer Rohrleitung (20), im Brandfall, wobei das Verfahren die folgenden Schritte umfasst:
- Bereitstellen eines Brandschutzelements (10) gemäß einem der vorhergehenden Ansprüche, und
- Einbringen des Brandschutzelements (10) in die Öffnung (22), wobei die Zungen (14) des Brandschutzelements (10) mindestens teilweise aus der Öffnung (22) vorstehen und den brennbaren Körper umgeben;
wobei sich die Zungen beim Erwärmen in Richtung auf die Öffnung (22) bewegen.

14. Verfahren nach Anspruch 13, **dadurch gekennzeichnet, dass** mindestens der bandförmige Träger (12) des Brandschutzelements (10) zwischen der Wand (24) oder Decke und dem brennbaren Körper in die Öffnung (22) eingeschoben und darin befestigt wird.

15. Verfahren nach Anspruch 13, **dadurch gekennzeichnet, dass** das Brandschutzelement (10) an dem brennbaren Körper befestigt und zusammen mit diesem in die Öffnung (22) eingesetzt wird.
